Europäisches Patentamt

(19) European Patent Office

Office européen des brevets

(11) Publication number: **0 139 418**

A1

(12) **EUROPEAN PATENT APPLICATION**

(21) Application number: **84305916.3**

(22) Date of filing: **30.08.84**

(51) Int. Cl.⁴: **B 65 G 53/30**
**B 65 G 53/66, B 03 B 11/00**

(30) Priority: **30.08.83 AU 1139/83**

(43) Date of publication of application:
**02.05.85 Bulletin 85/18**

(84) Designated Contracting States:
**AT BE CH DE FR GB IT LI NL SE**

(71) Applicant: **MINPRO PTY. LIMITED**
**1 National Street**
**Rozelle New South Wales 2039(AU)**

(72) Inventor: **Lees, Jeremy James**
**124 Louisa Road**
**Birchgrove New South Wales, 2041(AU)**

(72) Inventor: **Pryor, Murray Howard**
**58 Lord Street**
**Roseville New South Wales, 2069(AU)**

(74) Representative: **Roos, Michael John et al,**
**KILBURN & STRODE 30 John Street**
**London WC1N 2DD(GB)**

(54) Mineral processing installation.

(57) A method and installation for mineral processing adapted to form a slurry from an intermittent supply of a particulate mineral and to feed the slurry selectively to one or more mineral processing devices such as spirals, cyclones, sieve bends or the like in accordance with the pulp density of the slurry.

The method comprises feeding the particulate mineral at an irregular rate to a slurrying vessel where the mineral is slurried with water, conveying the slurry to metering means, sensing, directly or indirectly, the pulp density of the slurry being conveyed and adjusting the metering means to return the slurry to the slurrying vessel and/or to direct the slurry to one or more mineral processing devices in accordance with the pulp density of the slurry. An installation for carrying out the method is described.

./...

Croydon Printing Company Ltd.

FIG.1

The present invention relates to a mineral processing installation and more particularly to a mineral processing installation in which the problem of fluctuating feedstock supply is handled by selectively distributing the feedstock supply to one or more of a plurality of mineral processing installations.

It is conventional in the mineral processing industry for mineral processing installations which are fed by a fluctuating feedstock supply to include substantial storage facilities into which the fluctuating feedstock supply is fed. A constant flow of feedstock can then be drawn from the storage facility to feed the mineral processing device or devices. In the event that the feedstock is in the form of a slurry then further complications arise due to the need to maintain the mineral particles in suspension while the slurry is contained within the storage facility.

The present invention provides means for handling an irregular or intermittent supply of a particulate mineral. The apparatus and method according to the invention allows the establishment and maintenance of an appropriate pulp density in a slurry of the particulate and controls the destination of that slurry in accordance with the pulp density of the slurry.

The present invention consists in a method for processing minerals comprising feeding a particulate mineral at an irregular rate to a slurrying vessel, forming an aqueous slurry of the mineral particles in the slurrying vessel, conveying the slurry to metering means, measuring directly or indirectly the pulp density of the slurry as it is being conveyed and adjusting the metering means to return the slurry to the slurrying vessel and/or to direct the slurry to one or more mineral processing devices in accordance with the pulp density of the slurry.

In a further aspect the present invention consists in a mineral processing installation, comprising a slurrying vessel, into which a particulate mineral may be fed at an irregular rate, means to form an aqueous slurry of the particulate mineral in the slurrying vessel, conveying means to convey the slurry from the slurrying vessel to metering means, measurement means to measure, directly or indirectly, the pulp density of the slurry being conveyed to the metering means, and means to adjust the metering means such that the slurry is returned to the slurrying vessel and/or is directed to one or more mineral processing devices in accordance with the pulp density of the slurry.

The method and installation according to the present invention may be used to control the feeding of any slurry of particulate minerals. Such minerals may include coal, iron ore, gold containing minerals, tin containing minerals, sand, clays and the like. The particle size may range typically from 50 microns to 10 cm though preferably the particle size is from 100 microns to 3 mm, most preferably from 150 microns to 1 mm.

The development of a suitable pulp density is normally required for efficient operation of the mineral processing device to which the slurry is to be fed. As an example, coal slurries being fed to spiral separators desirably have a pulp density of between 25 and 40 weight percent. Similar slurries containing iron ore desirably have pulp densities of from 55 to 65 weight percent. The most desirable pulp density will depend upon the mineral being processed and the nature of the mineral processing installations.

The method and installation according to this invention may be used to feed any mineral processing device adapted to use a slurry feedstock. Such mineral processing devices include spiral separators, cyclones, crushers and grinders, screening devices including sieve bends, centrifuges, filters including band filters and the like. Such devices normally require a feedstock of a defined pulp density range delivered at a defined flow rate range. The method and installations according to this invention allow the development of an appropriate pulp density in the slurry and then selectively feed that slurry to one or more mineral processing devices. If the pulp density begins to fall so the number of mineral processing devices being fed is reduced to cause more slurry to be recycled to the slurrying vessel and thereby keep the pulp density up.

The slurrying vessel may comprise any suitable tank, sump or the like into which the particulate mineral is fed either as a particulate solid or a dense slurry. Water is added to the slurrying vessel to maintain it at a given minimum volume. The slurrying vessel may be fed directly from a tailing dump, mine run material or the like or the particulate mineral may undergo preliminary processes such as classifying, desliming or the like. The particulate material may be subjected to agitation in the slurrying vessel to aid the formation of a slurry or, alternatively, this may be achieved or enhanced by or during the conveying of the slurry to the metering means.

The slurry may be conveyed to the metering means by any suitable means, however, it is preferred to convey it by a suitable pump through a tubular duct. The pulp density of the slurry may be measured by any suitable means or method. In one preferred method a nuclear densitometer is used to measure the pulp density directly. In another embodiment the slurry is conveyed up a vertically inclined pipe and the weight of the slurry in the pipe is used as an indirect measure of the pulp density.

The metering means may in a single step both control the amount of slurry to be returned to the slurrying vessel and the number of mineral processing devices being fed by the slurry not being so returned. It is within the ambit of the invention however to provide separate devices to carry out these two steps sequentially.

In the former case the metering means preferably comprise a cylindrical vessel having a vertical axis. The slurry is pumped upwardly into the lower end of the vessel in an axial direction. A baffle connected to a hydraulic ram is positioned within the cylindrical vessel and is adapted to be moved along the vertical axis of the vessel by the ram. A return line runs from the lower end of the vessel back to the slurrying vessel and a plurality of radially directed apertures in the side wall of the vessel each lead to a single mineral processing device. The apertures spaced apart along the axis of vessel and the hydraulic ram is controlled such that when the pulp density of the slurry is below a given minimum value the baffle is lowered to prevent any of the slurry reaching the radially directed apertures and all of the slurry is returned to the slurrying vessel. As the pulp density rises above the minimum, the hydraulic ram will be raised and lowered in stepwise fashion in accordance with the instantaneous pulp density to allow slurry to flow into one or more of the apertures and thus to one or more of the mineral processing devices.

In the latter metering means arrangement the slurry stream may first be divided into a return stream and a process stream in accordance with the pulp density of the slurry and in a second step the flow rate of the process stream may be measured and distribution means controlled to feed the slurry to one or more mineral processing devices in accordance with the flow rate of the process stream.

Hereinafter given by way of example only are preferred embodiments of the present invention described with reference to the accompanying drawings in which:-

Fig. 1 is a schematic illustration of a mineral processing installation according to this invention, and

Fig. 2 is a schematic illustration of a further mineral processing installation according to this invention.

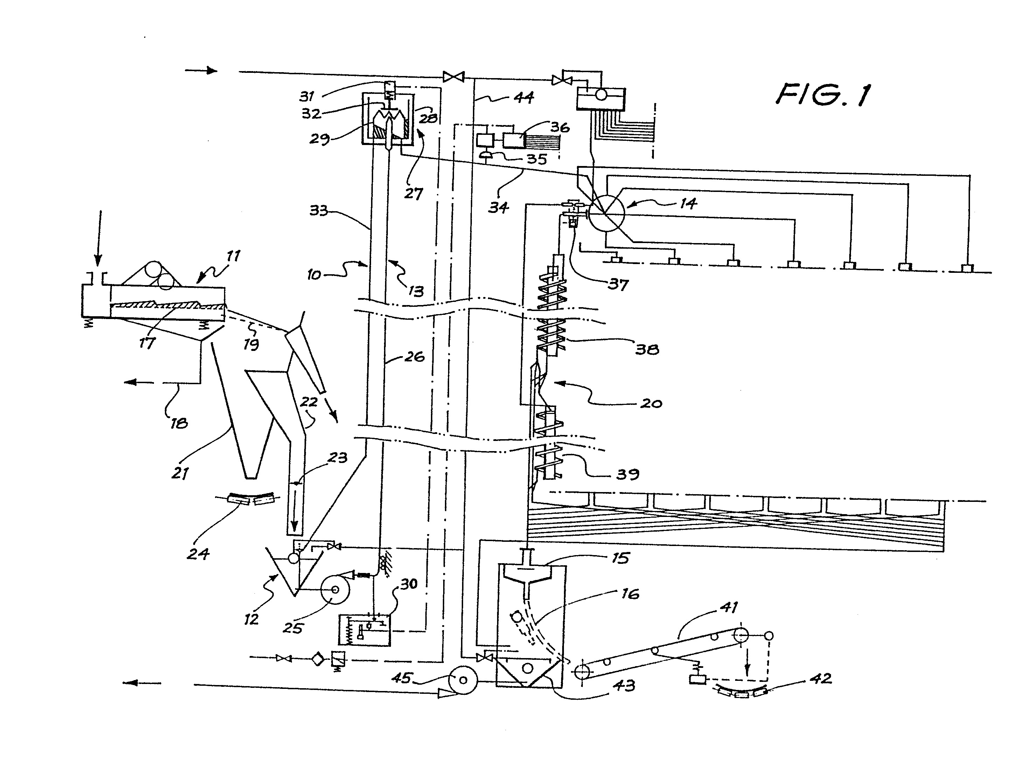

The mineral processing installation 10, described with reference to Fig. 1, is designed to receive coal washery tailings, to slurry the tailings, to distribute slurry to one or more of a group of spiral concentrations to produce a product stream and to dewater the product stream in a sieve bend. The installation 10 comprises the following principal parts:-

i) a preliminary screening device 11;

ii) a slurrying tank 12 and recycle circuit 13 to produce a slurry of the desired pulp density;

iii) a pressure distributor 14 to receive a slurry stream from the circuit 13 and to distribute it to one or more of eight discharge lines;

iv) eight cascades of spirals concentrators 20 to separate the coal particles from the gangue; and

v) a distributor 15 feeding a sieve bend 16 to dewater the recovered coal particles.

The installation 10 will now be described in greater detail.

The washery tailings are fed to the preliminary screening device 11 in which the material is screened on a vibratory sieve screen 17 to remove slimes which are disposed of through discharge line 18. The material passing over the sieve screen 17 are passed over a grizzly 19. Oversize particles are separated for separate treatment by the grizzly 19 while the majority of the material passes therethrough and drops into a conical chute 21. Under normal operation the material passing into the chute 21 is caught by a subsidiary chute 22 and fed to the slurrying tank 12. In the event that the slurrying tank 12 becomes overloaded a valve 23 in chute 22 can be closed and the coal tailings build up in chute 23 and eventually excess material is diverted via chute 21 onto a conveyor 24 for storage in a suitable stockpile.

The tailings fed into slurrying tank 12 are mixed with water and then drawn out of the tank 12 by pump 25. The pump 25 pumps the slurry up a vertically extending pipe 26 of the recycle circuit 13. At its upper end the pipe 26 discharges into a valve arrangement 27 adapted to selectively pass the slurry either back to the slurrying tank 12, if the pulp density is not high enough, or to the pressure distributor 14, if the pulp density is within the correct range, the valve 27 is controlled by a weight sensor 30 which measures the weight of the column of slurry in the pipe 26. As the mineral particles are substantially more dense than water the weight in the pipe 26 increases as the pulp density increases. When the weight of the slurry reaches a predetermined value the valve 27 is actuated to direct the slurry to the pressure distributor 14.

The valve 27 comprises a cylindrical housing 28 concentric with the upper end of pipe 26, and a cylindrical baffle 29 surrounding the upper end of the pipe 26 within the housing 28. The upper edge of the baffle 29 is serrated. A pneumatic actuated plunger 31 carrying a circular baffle plate 32 is disposed above the upper end of the pipe 26. The baffle plate 32 is raised initially such that slurry pumped up pipe 26 will hit the baffle plate 28 and be deflected sideways over the cylindrical baffle 29 and into the space between that baffle 29 and the housing 28. The slurry directed into this space is returned to slurrying tank 12 along line 33. As the pulp density in the slurry rises the baffle plate 32 is lowered and a gradually increasing proportion of the slurry is directed to the pressure distributor 14 through line 34.

The rate of slurry flow through line 34 is sensed by a sensor 35 which, acting through control circuit 36, causes the eight individual pinch valves 37 (of which only one is shown in detail) to open and close. Each of the pinch valves 37 controls the flow of slurry to the double run, upper, spiral 38 of one cascade 20 and water to the lower spiral 39 of that cascade.

The stream of slurry directed to the upper spiral 38 is split in two, one half being directed to each of the runs of the spiral 38. The ouptut from each run is split into three parts, viz: product, middlings and gangue, which are respectively combined together. The product is fed directly to the distributor 15 and sieve bend 16; the middlings are fed to the lower spiral 39; and the gangue is directly discharged to waste. The middlings from spiral 38 are again run on spiral 39 and split into three as before. The product stream from spiral 39 is fed to the distributor 15 and sieve bend 16 while the middlings and tailings are fed to waste.

The combined product stream is fed through the distributor 15 which is made according to Australian patent application No. 80859/82, onto the sieve screen 16, made according to Australian Patent Application No. 90792/82. The coal particles in the slurry are thus substantially dewatered and the final product so formed is led away from the installations on conveyors 41 and 42.

Fresh water is supplied as required to the slurrying tank 12, the spirals 39 and the waste receptacle 43 of the sieve bend by a fresh water supply circuit 44 The waste from the sieve bend 16 is pumped from receptacle 43 by pump 45.

In operation when slurry is being flowed down line 34 the opening and closing of individual pinch valves 37 is controlled by sensor 35 and control circuit 36 in accordance with the rate of flow of the slurry to the pressure distributor 14. Once the first cascade of spirals 20 is up to capacity a second pinch valve 37 will be opened if the rate of flow of slurry through the pipe 34 increases. Conversely if a number of cascades 20 are being fed with the slurry and the rate of flow through pipe 34 diminishes then one or more of the pinch valves 37 will be closed.

In this way the necessity to have a large surge tank to hold slurry is avoided. As the inflow of washery tailings ebbs and flows so the number of cascades 20 of spirals in use will respectively fall and rise.

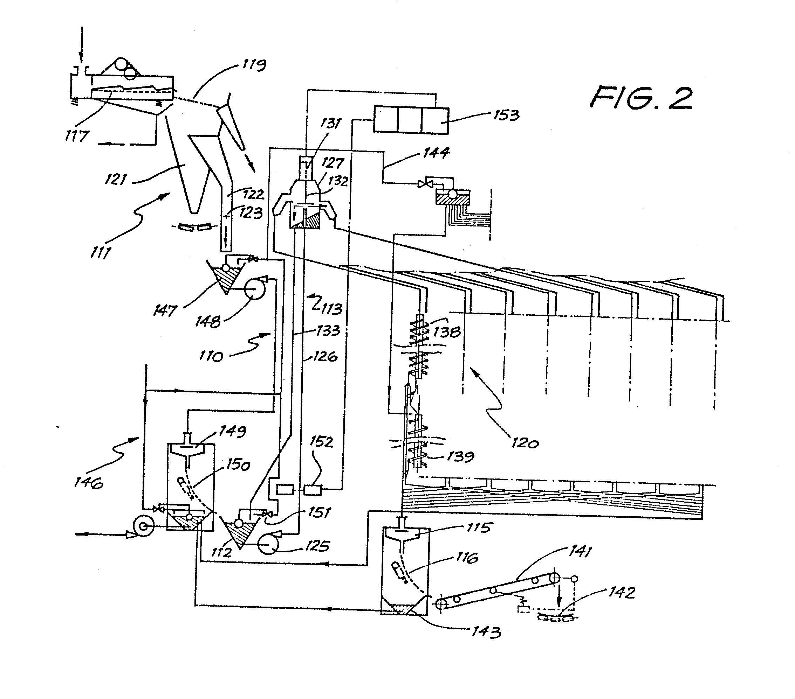

The embodiment of the present invention described with reference to Fig. 2 is in essence similar to that described with reference to Fig. 1 except that the pulp density is measured directly and a single metering means controls both the amount of slurry to be recycled and the distribution of the remainder of the slurry to one or more of the spiral concentrators. Parts described with reference to Fig. 2 similar to parts described with reference to Fig. 1 are given the same number subject to the addition of the prefix 1.

The mineral processing installation 110 is also designed to receive and process coal washery tailings and comprises:-
i)   a preliminary screening device 111,
ii)  a secondary desliming circuit 146,
iii) a slurry tank 112 and recycle circuit 113,
iv)  eight cascades of spirals 120 and
(v)  distributor 115 feeding a sieve bend 116 to dewater the recovered coal particles.

The installation 110 will now be described in greater detail insofar as it differs from the installation 10 described with reference to Fig. 1.

The coal particles passing down chute 122 enter the secondary desliming circuit 146 by entering tank 147 where they are slurried and pumped by pump 148 to a distributor 149 and sieve bend 150, respectively similar to distributor 115 and sieve bend 116. The slimes and a proportion of the water is removed in sieve bend 150. The oversize particles are fed from sieve bend 150 into the slurrying tank 112 where additional water is added through valve 151 to maintain the minimum volume of slurrying tank 112. Pump 125 pumps the slurry up pipe 126 into a valve arrangement 127. As the slurry flows up the pipe 126 it passes a nuclear densitometer 152 which measures the pulp density of the slurry.

The signal produced by densitometer 152 is fed to a hydraulic relay 153 which controls the movement of a baffle 132 in the valve arrangement 127.

At pulp densities below a predetermined density the

- 10 -

baffle 132 is lowered to its lowermost position within valve 127 by a hydraulic ram 131 and all of the slurry is recycled to slurrying tank 112 through line 133. As the pulp density rises so the hydraulic relay 153 causes the hydraulic ram 131 to raise the baffle 132 in a stepwise fashion. Each upward step of the baffle 132 allows slurry to flow through one, or one more, of a series of radially directed lines 154 which each flows to one of the double run, upper, spirals 138.

The slurry is thereafter treated as described with reference to Fig. 1.

It is to be particulary noted that there are a number of aspects to the present invention including that set out in the claims. In addition the method and apparatus disclosed can have application in the processing of particulate materials at large and not necessarily for mineral processing. Furthermore, according to another aspect of the present invention, an installation for processing particulate material comprises a set of concentrators supplied from a common source and each having an input control valve, and control means arranged to open the control valves sequentially as the concentrators sequentially attain capacity flow.

According to a further aspect of the present invention, a method of processing particulate materials and specifically minerals, comprises feeding a particulate material to a slurrying vessel, conveying the slurry from the slurrying vessel to and through a slurry carrying circuit, sensing a characteristic of the slurry in the circuit, returning the slurry to the slurrying vessel if the desired characteristic of the slurry has not been attained, and passing the slurry onward for further processing if the desired characteristic of the slurry has been attained.

0139418

- 11 -

THE CLAIMS DEFINING THE INVENTION ARE AS FOLLOWS:

1.    A method for processing minerals comprising feeding a particulate mineral at an irregular rate to a slurrying vessel, forming an aqueous slurry of the mineral particles in the slurrying vessel, conveying the slurry to metering means, measuring directly or indirectly the pulp density of the slurry as it is being conveyed and adjusting the metering means to return the slurry to the slurrying vessel and/or to direct the slurry to one or more mineral processing devices in accordance with the pulp density of the slurry.

2.    A method as claimed in claim 1 in which the slurry particulate mineral is deslimed prior to being slurried.

3.    A method as claimed in claim 1 or claim 2 in which the pulp density of the slurry is determined indirectly by weighing a known volume of slurry.

4.    A method as claimed in any one of claims 1 to 3 in which the particulate mineral has a particle size of from 3 mm to 100 microns.

5.    A method as claimed in any one of claims 1 to 5 in which the metering is carried out in two steps, a first step returning all or a part of the slurry to the slurrying vessel and a second step directing such of the slurry as is not returned to one or more mineral processing devices.

6.    A mineral processing installation, comprising a slurrying vessel, into which a particulate mineral may be fed at an irregular rate, means to form an aqueous slurry of the particulate mineral in the slurrying vessel, conveying means to convey the slurry from the slurrying vessel to metering means, measurement means to measure, directly or indirectly, the pulp density of the slurry being conveyed to the metering means, and means to adjust the metering means such that the slurry is returned to the slurrying vessel and/or is directed to one or more mineral processing devices in accordance with the pulp density of the slurry.

7.    A mineral processing installation as claimed in claim 6 or claim 7 in which the measurement means comprise a load cell or other weighing device to weigh a predetermined quantity of slurry as it is flowing upwardly in a pipe.

8. A mineral processing installation as claimed in claim 6 or claim 7 in which the metering means comprises a cylindrical vessel having a vertical axis, inlet means introducing the slurry into the lower end of the vessel, a baffle moveable axially of the vessel in accordance with the measured pulp density of the slurry, a return line connecting the vessel with the slurrying vessel, a plurality of outlets from the vessel arranged in spaced apart array along its height, each outlet being in connection with a mineral processing device.

9. A mineral processing installation as claimed in any one of claims 6 to 8 in which desliming means are provided to deslime the particulate mineral prior to it entering the slurrying vessel.

10. A mineral processing installation as claimed in claim 6 in which the metering means comprises first metering means to divide the slurry stream into a return stream and a process stream in accordance with the pulp density of the slurry and second metering means to measure the flow rate of the process stream and to direct it to one or more mineral processing devices in accordance with the flow rate of the process stream.

1-2                    0139418

# FIG.1

FIG. 2

**European Patent Office**

**EUROPEAN SEARCH REPORT**

| | DOCUMENTS CONSIDERED TO BE RELEVANT | | EP 84305916.3 |

| Category | Citation of document with indication, where appropriate, of relevant passages | Relevant to claim | CLASSIFICATION OF THE APPLICATION (Int. Cl.4) |
|---|---|---|---|
| A | DE – B2 – 2 629 797 (AMERICAN MINECHEM.CORP.) -- | | B 65 G 53/30 B 65 G 53/66 B 03 B 11/00 |
| A | GB – A – 2 108 589 (KAMYR INC.) -- | | |
| A | DE – B2  2 610 547 (SUMITOMO) ---- | | |

TECHNICAL FIELDS SEARCHED (Int. Cl.4)

B 65 G

The present search report has been drawn up for all claims

| Place of search | Date of completion of the search | Examiner |
|---|---|---|
| VIENNA | 06-12-1984 | PISSENBERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82